# EUROPÄISCHE PATENTSCHRIFT

(11) **EP 1 090 055 B1**
(45) Veröffentlichungstag und Bekanntmachung des Hinweises auf die Patenterteilung: **27.03.2002**
(21) Anmeldenummer: 99923570.8
(22) Anmeldetag: 10.05.1999
(51) Int. Cl.: C08G 18/10, C08G 18/48, C08G 18/76

(54) **ISOCYANATGRUPPENHALTIGE PREPOLYMERE UND VERFAHREN ZU IHRER HERSTELLUNG**
PREPOLYMERS CONTAINING ISOCYANATE GROUPS AND A METHOD FOR THE PRODUCTION THEREOF
PREPOLYMERES CONTENANT DES GROUPES ISOCYANATE ET LEUR PROCEDE DE PRODUCTION

(30) Priorität: 26.05.1998 DE 19823393
(43) Veröffentlichungstag der Anmeldung: 11.04.2001
(73) Patentinhaber: BASF AKTIENGESELLSCHAFT, 67056 Ludwigshafen (DE)
(72) Erfinder: REICHELT, Michael, D-01945 Ruhland (DE); ROTERMUND, Udo, D-01990 Ortrand (DE); HEMPEL, Renate, D-01945 Ruhland (DE); FALKE, Peter, D-01987 Schwarzheide (DE); VON MALOTKI, Peter, D-01936 Cosel (DE); SEIFERT, Holger, D-49448 Hüde (DE)
(86) Internationale Anmeldenummer: EP9903195
(87) Internationale Veröffentlichungsnummer: WO9961501

(56) Entgegenhaltungen:
- EP-A- 0 550 901
- EP-A- 0 676 434
- WO-A-98/34973
- DE-A- 19 752 037
- US-A- 4 972 004

## Beschreibung

Die Erfindung betrifft neue isocyanatgruppenhaltige Prepolymere, ein Verfahren zu ihrer Herstellung durch Umsetzung eines Isocyanatgemisches, bestehend vorwiegend aus Diphenylmethandiisocyanaten und Polyphenylpolymethylenpolyisocyanaten, mit Polyolen oder einem Gemisch von Polyolen und die Verwendung dieser Prepolymere zur Herstellung von Polyurethanen, insbesondere Polyurethanschaumstoffen.

Die Herstellung von Polyurethanen, einschließlich Polyurethanschaumstoffen, durch Umsetzung von organischen Polyisocyanaten und/oder modifizierten organischen Polyisocyanaten bzw. Prepolymeren mit höherfunktionellen Verbindungen mit mindestens zwei reaktiven Wasserstoffatomen, beispielsweise Polyoxyalkylenpolyaminen und/oder vorzugsweise organischen Polyhydroxylverbindungen, insbesondere Polyetherolen mit Molekulargewichten von z.B. 200 bis 6000, und gegebenenfalls Kectenverlängerungs- und/ oder Vernetzungsmitteln mit Molekulargewichten bis ca. 400 in Gegenwart von Katalysatoren, Treibmitteln, Hilfsmitteln und/oder Zusatzstoffen ist bekannt und wurde vielfach beschrieben. Eine zusammenfassende Übersicht hierzu wird z.B. im Kunststoff-Handbuch, Band VII, "Polyurethane", 1. Auflage 1966, herausgegeben von Dr. R. Vieweg und Dr. A. Höchtlen, und 2. Auflage 1983 sowie 3. Auflage 1993, herausgegeben von Dr. G. Oertel (Carl Hanser Verlag, München, Wien), gegeben.

Als chemische Strukturen, die aus den Polyisocyanaten entstehen, können hier Polyurethane, Polyharnstoffe, Polyisocyanurate und auch weitere Isocyanataddukte wie Allophanate, Biurete, Carbodiimide und deren Isocyanataddukte, Oxazolidone, Polyimide, Polyamide u.a. vorliegen. Dabei wird die Art dieser Strukturen durch die Reaktionspartner der Isocyanate, die Katalyse und die Reaktionsbedingungen gesteuert. Man faßt diese Isocyanataddukte auch allgemein unter dem Begriff Polyurethane zusammen, da die Polyurethane von den Polyisocyanataddukten die wichtigste und häufigste Stoffgruppe sind.

Auch die Herstellung von NCO-Prepolymeren ist in zahlreichen Schriften beschrieben worden, beispielsweise auch im oben genannten Kunststoff-Handbuch.

Für die Schaumstoffherstellung ist es günstig, wenn die Schaumstoffkörper unmittelbar nach der Herstellung schnell entformt werden können. Das gilt sowohl für das Entformen aus einem Formwerkzeug bei der diskontinuierlichen Schaumstoffherstellung als auch für die kontinuierliche Herstellung von Schaumstoffen, beispielsweise mit dem Doppeltransportband-Verfahren. Dabei kommt es darauf an, daß die Entformung selbst ohne Rißbildung vonstatten geht und/oder der Schaumstoff durch entsprechend gute Aushärtung schnellstmöglich nach der Synthese einer mechanischen Behandlung, z.B. einem Sägeschnitt ohne Rißbildung oder andere Zerstörungen, unterzogen werden kann. Die Schaumstoffe sollen dabei eine feinzellige Struktur aufweisen. Außerdem ist die Fließfähigkeit der reagierenden Mischung aus Isocyanat und wasserstoffaktiven Stoffen für die Schaumstoffbildung von besonderer Bedeutung. Diese Fließfähigkeit wird in bekannter Weise von der Viskosität der Komponenten und damit auch der Isocyanatkomponente beeinflußt. Für eine gute Fließfähigkeit ist eine niedrige Viskosität der Isocyanatkomponente erforderlich. Man kann die geforderte bessere Aushärtung mit geringerer Rißbildung beispielsweise durch Einsatz eines höherviskosen Isocyanates mit einem geringeren Anteil an Diphenylmethandiisocyanaten und einem höheren Anteil an Polyphenylpolymethylenpolyisocyanaten in bekannter Weise erreichen. Nicht gelöst ist die Forderung, bei einer gegebenen gleichbleibenden Viskosität der Isocyanatkomponente die Rißbildung zu verringern, d.h. die Aushärtung unmittelbar nach der Schaumbildung zu verbessern.

In EP-A-0 543 536 wird die Herstellung von Schaumstoffen in Gegenwart einer Flüssigkeit, die in der Reaktionsmischung in hohem Maße unlöslich ist und als Emulsion oder Mikroemulsion vorliegt, beschrieben. Diese Emulsion soll zu einer feinzelligeren Struktur des Schaumstoffes führen. Als Isocyanatkomponente werden zu diesem speziellen Zweck neben üblichen Gemischen aus Diphenylmethandiisocyanaten mit Polyphenylpolymethylenpolyisocyanaten auch Prepolymere aus diesen Gemischen und einer difunktionellen, mit Isocyanat reaktiven Komponente in einem Bereich von 1 bis 150 millimol Urethan/100 g beschrieben.

In WO 93/08224 wird eine Polyisocyanatzusammensetzung als Gemisch von 30 bis 85 Gew.-% NCO-Prepolymer, bis zu 50 Gew.-% Polyphenylpolymethylenpolyisocyanaten und bis zu 40 Gew.-% Diphenylmethandiisocyanaten beschrieben. Als Vorteil wird eine verbesserte Mischbarkeit mit Hartschaumpolyolen angegeben. Zu diesem Zweck werden beträchtliche Teile der NCO-Gruppen mit Polyolen einer Molmasse ab 1100 g/mol aufwärts umgesetzt, sodaß immer NCO-Gehalte des Prepolymeren weit unter 30 Gew.-%, in bevorzugten Beispielen von 18,1 bis 19,8 Gew.-%, erhalten werden. Diese Prepolymeren ergeben noch zu große Zellen im Hartschaumstoff und führen zu einer unbefriedigenden Aushärtung.

In DE-A-4118362 wird die Herstellung von Rohrisolationen via Hartschaum mit einer äußeren massiven Polyurethan-Deckschicht beschrieben. Unter anderem werden auch NCO-Prepolymere aus Diphenylmethandiisocyanaten mit bis zu 30 Gew.-% Polyphenylpolymethylenpolyisocyanaten und einem NCO-Gehalt der Prepolymeren von 5 bis 20 Gew.-% eingesetzt.

In US-A-5,164,422 wird die Herstellung von Polyisocyanuratschäumen mit Prepolymeren aus polymeren Diphenylmethandiisocyanaten und Polyesteralkoholen mit einer Funktionalität deutlich unter 4 beschrieben.

In EP-A-0 392 788 wird ein Prepolymeres aus Diphenylmethandiisocyanaten für die Herstellung von rein wassergetriebenen Schaumstoffen angegeben, das einen NCO-Gehalt von 2 bis 12 Gew.-% NCO aufweist. Die Viskosität ist für eine normale Schaumstoffverarbeitung zu hoch, so werden in einem Vorzugsbeispiel 38000 mPas genannt.

In EP-A-0 320 134 werden Prepolymere aus Diphenylmethandiisocyanaten und Polyolen einer Funktionalität deutlich unter 4 als Bestandteile einer Mischung mit Diphenylmethandiisocyanaten mit Polyphenylpolymethylenpolyisocyanaten für die Herstellung von Hartschaum beschrieben.

In AU 8767-425 wird der Einsatz von Prepolymeren aus einem Gemisch von 45 bis 95 Gew.-% Diphenylmethandiisocyanaten und 5 bis 55 Gew.-% Polyphenylpolymethylenpolyisocyanaten und Polyesterpolyolen einer mittleren Funktionalität deutlich unter 4 sowie einem NCO-Gehalt der Prepolymeren deutlich unter 30 Gew.-% zur Herstellung von Weichschaum mit einer exzellenten Adhäsion an PVC beschrieben.

SU 876 657 beschreibt den Einsatz eines Prepolymeren aus einem Gemisch von 75 bis 65 Teilen Diphenylmethandiisocyanaten mit 25 bis 35 Teilen Polyphenylpolymethylenpolyisocyanaten und Triolen für Integralhartschaum.

NL 7605 286 beschreibt die Verwendung eines Prepolymeren aus Diphenylmethandiisocyanaten im Gemisch mit deren Uretoniminen und Diolen.

DT 2513 793 und DT 2513 796 beschreiben den Einsatz eines Prepolymeren aus einem Gemisch von 55 bis 85 Teilen Diphenylmethandiisocyanaten mit Polyphenylpolymethylenpolyisocyanaten und Diolen.

In EP-A-0 550 901 werden Isocyanate der Diphenylmethanreihe mit einem 75 bis 95 gew.-%igen Anteil an Zweikernisomeren mit einem Anteil an 2,4'-Isomeren von 15 bis 40 Gew.-% und an 2,2'-Isomeren von 2 bis 10 Gew.-% sowie einem Anteil von 5 bis 25 Gew.-% an polymeren Isocyanaten der Diphenylmethanreihe mit Polyetherpolyolen einer Funktionalität von 3 bis 8 und einer OH-Zahl von 350 bis 1000 mg KOH/g sowie einer Molmasse von 150 bis 1000 g/mol umgesetzt. Das Hauptziel bei dieser Erfindung ist die Herstellung heller Isocyanatkomponenten, aus denen dann besonders helle Polyurethan-Hartschaumstoffe hergestellt werden können.

In WO 94/29361 werden Prepolymere mit NCO-Gehalten von 5 bis 10 Gew.-% durch Umsetzung von Isocyanaten mit Polyolen in einem Temperaturbereich von 40 bis 80°C erzeugt, wobei die Umsetzung konventionell, d.h. in einem dafür geeigneten Reaktionsgefäß erfolgt.

In US-A-5,114,989 werden beispielsweise MDI-Prepolymere genannt, die mit ethylenoxidreichen Polyolen umgesetzt wurden. Dabei wird darauf hingewiesen, daß die Polyoldosierung zum im Reaktor vorgelegten Isocyanat so zu wählen ist, daß eine Temperatur im Bereich von 45 bis 90°C eingehalten bzw. nicht überschritten wird.

In DE-A-4202972 wird eine kontinuierliche Herstellung eines Prepolymeren mit Hilfe einer speziellen Mischdüse beschrieben. Faktisch wird hier die Mischung mit Hilfe eines Mischkopfes einer Polyurethan-Schäummaschine realisiert. Diese kontinuierliche Umsetzung findet in einer separaten Einheit statt.

In EP-A-0 480 588 und EP-A-0 722 962 wird eine kontinuierliche Erzeugung von Isocyanatprepolymeren beschrieben, wobei eine vorhandene Schäumanlage bei Stillstand der Verschäumanlage bis zum Mischkopf hin für die kontinuierliche Dosierung der Komponenten für die Prepolymerherstellung genutzt wird. Während dieses Zeitpunktes kann die gesamte Schäumanlage nicht für den eigentlichen Verwendungszweck genutzt werden, was als ein Nachteil zu betrachten ist.

Beschrieben sind Versuche (DE-A-2842806) Prepolymere kontinuierlich in einem Reaktionsextruder zu erzeugen.

In DE-A-2302564 sind spezielle Mischdüsen, die eine innige Komponentendurchmischung erzeugen sollen, und ein derartiger Mischkopf für die kontinuierliche Prepolymerherstellung genannt.

Ebenfalls genannt ist eine kontinuierliche Herstellung, bei der beide Reaktionspartner über einen Statikmischer in einer Prepolymerherstellungseinheit zusammengeführt werden (DE-A-2823762).

Alle beschriebenen Prepolymeren auf der Grundlage von Gemischen aus Diphenylmethandiisocyanaten mit Polyphenylpolymethylenpolyisocyanaten im Vergleich zu nicht prepolymerisierten Gemischen aus Diphenylmethandiisocyanaten mit Polyphenylpolymethylenpolyisocyanaten gleicher Viskosität sind nicht geeignet, eine verbesserte Aushärtung mit verminderter Rißbildung und feinzelliger Struktur bei daraus hergestellten Schaumstoffen zu bewirken.

Die Aufgabe der Erfindung bestand damit darin, ein Prepolymeres auf der Basis von Gemischen aus Diphenylmethandiisocyanaten mit Polyphenylpolymethylenpolyisocyanaten zu entwickeln, das eine verbesserte Aushärtung mit verminderter Rißbildung bei feinzelliger Struktur von daraus hergestellten Schaumstoffen bewirkt.

Diese Aufgabe konnte überraschenderweise dadurch gelöst werden, daß ein Isocyanatgemisch, bestehend vorwiegend aus Diphenylmethandiisocyanaten und Polyphenylpolymethylenpolyisocyanaten, mit einem Anteil an Zweikernisomeren von höchstens 74 Gew.-% mit mindestens 4-funktionellen Polyolen oder einem Gemisch von Polyolen mit einer mittleren Funktionalität von mindestens 4, wobei die Polyole beziehungsweise Polyolgemische eine Hydroxylzahl von 200 bis 1650 mg KOH/g und eine zahlenmittlere Molmasse von weniger als 1100 g/mol besitzen, umgesetzt wird, wobei das isocyanatgruppenhaltige Prepolymere einen NCO-Gehalt von mindestens 30,0 Gew.-% aufweist.

Gegenstand der Erfindung sind demzufolge isocyanatgruppenhaltige Prepolymere, herstellbar durch Umsetzung eines Isocyanatgemisches, bestehend vorwiegend aus Diphenylmethandiisocyanaten und Polyphenylpolymethylenpolyisocyanaten, mit einem Anteil an Zweikernisomeren von höchstens 74 Gew.-% mit mindestens 4-funktionellen Polyolen oder einem Gemisch von Polyolen mit einer mittleren Funktionalität von mindestens 4, wobei die Polyole beziehungsweise Polyolgemische eine Hydroxylzahl von 200 bis 1650 mg KOH/g und eine zahlenmittlere Molmasse von weniger als 1100 g/mol aufweisen, mit einem NCO-Gehalt von mindestens 30,0 Gew.-%.

Gegenstände der Erfindung sind außerdem ein Verfahren zur Herstellung dieser isocyanatgruppenhaltigen Prepolymeren, deren Verwendung zur Herstellung von Polyurethanen sowie ein Verfahren zur Herstellung von Polyurethanen durch Umsetzung von mindestens einem erfindungsgemäßen isocyanatgruppenhaltigen Prepolymeren, gegebenenfalls im Gemisch mit weiteren organischen und/oder modifizierten organischen Isocyanaten (a) mit Verbindungen mit mindestens zwei reaktiven Wasserstoffatomen (b) in Gegenwart von gegebenenfalls Treibmitteln (c), Katalysatoren (d) sowie gegebenenfalls weiteren Hilfsmitteln und/oder Zusatzstoffen (e).

Wir fanden bei unseren Untersuchungen überraschenderweise, daß sich mit den erfindungsgemäßen Prepolymeren feinzellige Schaumstoffe mit einer verbesserten Aushärtung und geringer Rißbildung herstellen lassen. Es wäre zu erwarten gewesen, daß diese Prepolymeren wegen ihres vergleichsweise niedrigen Gehaltes an Isocyanatadditionsprodukten nicht wesentlich andere Schaumstoffeigenschaften ergeben würden, als die nicht prepolymerisierten Isocyanatgemische.

Weiterhin war überraschend, daß auch bei einer Erzeugung der Prepolymeren im Isocyanatprozeßstrom gegenüber einer konventionellen Herstellung in einem speziellen Reaktionsgefäß keine Eigenschaftsunterschiede festzustellen sind. Wegen der unterschiedlichen Verweilzeitverteilungen von diskontinuierlichen und kontinuierlichen Prozessen wären unterschiedliche Eigenschaften der Prepolymeren zu erwarten gewesen.

Durch die Anwendung der erfindungsgemäßen Verfahrensvariante läßt sich kostengünstig ein Prepolymeres ohne zusätzliche Reaktionsbehälter erzeugen.

Zur Herstellung der isocyanatgruppenhaltigen Prepolymeren werden mindestens 4-funktionelle Polyole oder ein Gemisch von Polyolen mit einer mittleren Funktionalität von mindestens 4 eingesetzt, wobei die Polyole beziehungsweise Polyolgemische eine Hydroxylzahl von 200 bis 1650 mg KOH/g, vorzugsweise von 300 bis 1000 mg KOH/g, und eine zahlenmittlere Molmasse von weniger als 1100 g/mol, vorzugsweise von 280 bis 1000 g/mol, aufweisen.

Mindestens 4-funktionelle Polyole sind beispielsweise Polyetheralkohole auf der Basis von hochfunktionellen Startermolekülen, wie Pentaerythrit, oder Zuckeralkoholen, z.B. Hexiten, vorzugsweise Sorbit, oder Zuckern einschließlich polymerer Formen, wie Stärke und Cellulose. Derartige Startermoleküle sind u.a. beschrieben im Lehrbuch der organischen Chemie von H. Beyer, 8. Auflage 1961 im S. Hirzel Verlag Leipzig, Seite 281 bis Seite 314. Bevorzugt eingesetzt werden Addukte aus Hexiten, insbesondere Sorbit, und Zuckern, insbesondere Saccharose, und Alkylenoxiden, insbesondere Ethylenoxid und Propylenoxid.

Beimischungen auch von Polyolen, vorzugsweise Polyetheralkoholen oder Polyesteralkoholen, mit einer Funktionalität kleiner 4 sind möglich, sofern die erfindungsgemäß genannten Bedingungen eingehalten werden. Diese Polyole sind weiter unten unter den Ausführungen zur Komponente (b) näher beschrieben.

Besonders vorteilhaft ist es, wenn das eingesetzte Polyol ein Polyetherol, insbesondere ein Umsetzungsprodukt von Sorbit, Wasserspuren und Propylenoxid mit einer Hydroxylzahl von 200 bis 800 mg KOH/g, ist.

Die Polyole oder Polyolgemische werden vorteilhafterweise in einer Menge von 0,1 bis 5 Gew.-%, insbesondere von 0,5 bis 3 Gew.-%, bezogen auf das Gesamtgewicht des Prepolymeren, eingesetzt.

Zur Herstellung der isocyanatgruppenhaltigen Prepolymeren werden Isocyanatgemische, bestehend vorwiegend aus Diphenylmethandiisocyanaten und Polyphenylpolymethylenpolyisocyanaten, mit einem Anteil an Zweikernisomeren von höchstens 74 Gew.-%, vorzugsweise von 25 bis 70 Gew.-% und insbesondere von 28 bis 55 Gew.-% verwendet. Das Isocyanatgemisch kann die bei dessen Herstellung üblichen Nebenprodukte enthalten, üblicherweise in einer Menge von bis zu 10 Gew.-%.

Neben den beschriebenen Isocyanatgemischen können auch weitere organische und/oder modifizierte organische Polyisocyanate zur Herstellung der erfindungsgemäßen Prepolymeren mitverwendet werden. Dafür kommen die an sich bekannten aliphatischen, cycloaliphatischen, araliphatischen und vorzugsweise aromatischen mehrwertigen Isocyanate in Frage, wie sie weiter unten unter den Ausführungen zur Komponente (a) beschrieben sind. Wenn weitere organische und/oder modifizierte organische Polyisocyanate mitverwendet werden, so werden sie vorzugsweise in einer Menge von bis zu 50 Gew.-% zugegeben.

Die Polyoldosierung erfolgt zweckmäßigerweise so, daß für die Bildung der urethangruppenhaltigen Prepolymeren eine Reaktionstemperatur von 20 bis 100°C, vorzugsweise 70 bis 90°C, gewährleistet wird.

In einer bevorzugten Ausführungsform erfolgt die Umsetzung zum Prepolymeren durch Dosierung der Polyole oder des Polyolgemisches unmittelbar in den Prozeßstrom und/oder den Isocyanatbehälter der isocyanaterzeugenden Anlage.

Die Dosierung der umzusetzenden Polyolspezies erfolgt dabei kontinuierlich, gegebenenfalls auch diskontinuierlich, in den Isocyanatstrom bzw. in den Isocyanatbehälter einer Isocyanat-Produktionsanlage.

Falls die Prepolymerherstellung direkt in einer Isocyanat-Produktionsanlage erfolgt, können die gegebenenfalls mitverwendeten weiteren organischen und/oder modifizierten organischen Polyisocyanate neben den Polyolen oder Polyolgemischen in den Prozeßstrom dosiert werden. Es besteht aber auch die Möglichkeit, diese dem Prepolymeren nach dessen Herstellung zuzumischen.

Alle dosierten Komponenten müssen gut eingemischt werden.

Bei der kontinuierlichen Herstellung werden in einer bevorzugten Ausführungsform die Polyole oder das Polyolgemisch über einen Statikmischer oder eine ähnliche geeignete Mischvorrichtung insbesondere kontinuierlich in den Isocyanatstrom dosiert. Die Dosiergeschwindigkeit und die Dosiertemperatur werden dabei so gewählt, daß eine schnelle Umsetzung der zudosierten Polyole sichergestellt werden kann, ohne daß die Reaktion durch auftretende Wärmespitzen außer Kontrolle gerät. Durch diese Art der Dosierung entfallen die ansonsten üblichen Aufheizprozesse zur Prepolymerherstellung. Es ist auch möglich, über einen Statikmischer den Lagertank der Isocyanate, in den die Produkte mit einer relativ hohen Eintrittstemperatur gelangen, mit dem Polyol zu beaufschlagen. Während des Homogenisierungsprozesses kann die Ausreaktion des Prepolymeren erfolgen.

Bei der diskontinuierlichen Herstellung wird in einer bevorzugten Ausführungsform das Isocyanat oder Isocyanatgemisch in einen Rührbehälter vorgelegt, gegebenenfalls auf 30 bis 80°C erwärmt und das Polyol unter Rühren zugegeben. Zur Vervollständigung der Reaktion wird 0,5 bis 2 h bei 30 bis 80°C weitergerührt und das Prepolymere in einen Lagerbehälter oder das Versandgebinde abgefüllt.

Die erfindungsgemäßen isocyanatgruppenhaltigen Prepolymere weisen einen NCO-Gehalt von mindestens 30,0 Gew.-%, vorzugsweise von 30 bis 32 Gew.-%, auf. Der Viskositätsbereich bei 25°C liegt üblicherweise zwischen 100 und 5000 mPas.

Die Prepolymere/modifizierten Polyisocyanate können miteinander oder mit unmodifizierten organischen Polyisocyanaten, wie z.B. 2,4'-, 4,4'-Diphenylmethandiisocyanat, Roh-MDI, 2,4- und/oder 2,6-Toluylendiisocyanat gegebenenfalls gemischt werden.

Die erfindungsgemäßen isocyanatgruppenhaltigen Prepolymeren eignen sich hervorragend zur Herstellung von Polyurethanen. Insbesondere werden sie zu Polyurethanschaumstoffen, aber auch zu nichtzelligen Polyurethanen verarbeitet.

Die Herstellung der Polyurethane erfolgt durch Umsetzung in an sich bekannter Weise von mindestens einem erfindungsgemäß hergestellten isocyanatgruppenhaltigen Prepolymeren, gegebenenfalls im Gemisch mit weiteren organischen und/oder modifizierten organischen Isocyanaten (a) mit Verbindungen mit mindestens zwei reaktiven Wasserstoffatomen (b) in Gegenwart von gegebenenfalls Treibmitteln (c), Katalysatoren (d) sowie gegebenenfalls weiteren Hilfsmitteln und/oder Zusatzstoffen (e).

Zu den einzelnen Ausgangskomponenten sei beispielhaft folgendes ausgeführt:

Als organische und/oder modifizierte organische Polyisocyanate (a) zur Herstellung sowohl der erfindungsgemäßen Prepolymeren (mitverwendete Isocyanate), als auch der Polyurethane (mitverwendete Isocyanate) kommen die an sich bekannten aliphatischen, cycloaliphatischen, araliphatischen und vorzugsweise aromatischen mehrwertigen Isocyanate in Frage.

Im einzelnen seien beispielhaft genannt: Alkylendiisocyanate mit 4 bis 12 Kohlenstoffatomen im Alkylenrest, wie 1,12-Dodecandiisocyanat, 2-Ethyltetramethylen-diisocyanat-1,4, 2-Methylpentamethylendiisocyanat-1,5, Tetramethylendiisocyanat-1,4 und vorzugsweise Hexamethylendiisocyanat-1,6, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexlylmethandiisocyanat sowie die entsprechenden Isomerengemische, und vorzugsweise aromatische Di- und Polyisocyanate, wie z.B. 2,4- und 2,6-Toluylendiisocyanat (-TDI) und die entsprechenden Isomerengemische, 4,4'-, 2,4'- und 2,2'- Diphenylmethandiisocyanat (-MDI) und die entsprechenden Isomerengemische, Mischungen aus 4,4'-und 2,2'-MDI, Polyphenylpolymethylenpolyisocyanate, Mischungen aus 4,4'-, 2,4'- und 2,2'-MDI und Polyphenylpolymethylenpolyisocyanaten (Roh-MDI) und Mischungen aus Roh-MDI und TDI. Die organischen Di- und Polyisocyanate können einzeln oder in Form beliebiger Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen hierbei beispielsweise in Betracht: Urethangruppen enthaltende organische, vorzugsweise aromatische, Polyisocyanate mit NCO-Gehalten von 47 bis 5 Gew.-%, vorzugsweise von 40 bis 15 Gew.-%, bezogen auf das Gesamtgewicht, erhalten beispielsweise durch Umsetzung mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-MDI, modifizierte 4,4'- und 2,4'-MDI-Mischungen, modifiziertes Roh-MDI oder 2,4- bzw. 2,6-TDI, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethenglykole, -triole und/oder -tetrole.

Bewährt haben sich ferner flüssige, Carbodiimidgruppen und/oder Isocyanuratringe enthaltende Polyisocyanate mit NCO-Gehalten von 47 bis 5, vorzugsweise 40 bis 15, Gew.-%, bezogen auf das Gesamtgewicht, z.B. auf Basis von 4,4'-, 2,4'- und/oder 2,2'-MDI und/ oder 2,4- und/oder 2,6-TDI.

Die modifizierten Polyisocyanate können miteinander oder mit unmodifizierten organischen Polyisocyanaten, wie z.B. 2,4'-, 4,4'-MDI, Roh-MDI, 2,4- und/oder 2,6-TDI, gemischt werden.

Besonders bewährt haben sich als organische und/oder modifizierte organische Polyisocyanate (a) und kommen daher vorzugsweise zur Anwendung: Mischungen aus TDI-Isomeren und Roh-MDI oder Mischungen aus modifizierten Urethangruppen enthaltenden organischen Polyisocyanaten mit einem NCO-Gehalt von 47 bis 5 Gew.-%, insbesondere solche auf Basis von TDI-Isomeren, 4,4'-MDI, MDI-Isomerengemischen oder Roh-MDI, und insbesondere Roh-MDI mit einem MDI-Isomerengehalt von 30 bis 80 Gew.%, vorzugsweise von 30 bis 55 Gew.-%.

Als Verbindungen mit mindestens zwei reaktiven Wasserstoffatomen (b) werden zweckmäßigerweise solche mit einer Funktionalität von 2 bis 4, vorzugsweise 2 bis 3, und einem Molekulargewicht von 300 bis 8000, vorzugsweise von 300 bis 5000, verwendet. Bewährt haben sich z.B. Polyetherpolyamine und/oder vorzugsweise Polyole ausgewählt aus der Gruppe der Polyetherpolyole, Polyesterpolyole, Polythioetherpolyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyetherpolyole. Die Hydroxylzahl der Polyhydroxylverbindungen beträgt dabei in aller Regel 20 bis 80 und vorzugsweise 28 bis 56 mg KOH/g.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydriden, eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen und insbesondere Adipinsäure. Beispiele für zwei- und mehrwertige Alkohole, insbesondere Diole, sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. e-Caprolacton oder Hydroxycarbonsäuren, z.B. ω-Hydroxycapronsäure. Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2, ist, polykondensiert werden. Nach einer bevorzugten Ausführungsform wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1:1 bis 1,8 vorzugsweise 1:1,05 bis 1,2 polykondensiert.

Die erhaltenen Polyesterpolyole besitzen vorzugsweise eine Funktionalität von 2 bis 4, insbesondere 2 bis 3, und ein Molekulargewicht von 480 bis 3000, insbesondere 600 bis 2000.

Insbesondere als höhermolekulare Verbindungen mit mindestens zwei reaktiven Wasserstoffatomen verwendet werden jedoch Polyetherpolyole, die nach bekannten Verfahren, beispielsweise durch anionische Polymerisation mit Alkalihydroxiden, wie z.B. Natrium- oder Kaliumhydroxid, oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 4, vorzugsweise 2 bis 3, reaktive Wasserstoffatome gebunden enthält, oder durch kationische Polymerisation mit Lewissäuren, wie Antimonpentachlorid, Borfluorid-Etherat u.a., oder Bleicherde, als Katalysatoren aus einem oder mehreren Alkylenoxiden mit 2 bis 4 Kohlenstoffatomen im Alkylenrest hergestellt werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,5-Toluylendiamin, und 4,4', 2,4'- und 2,2'-Diaminodiphenylmethan. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin und Ammoniak. Vorzugsweise verwendet werden mehrwertige, insbesondere zwei- und/oder dreiwertige Alkohole, wie Ethandiol, Propandiol-1,2 und -2,3, Diethylenglykol, Dipropylenglykol, Butandiol-1,4, Hexandiol-1,6, Glycerin, Trimethylolpropan und Pentaerythrit, während für Hartschaumpolyetherole vorwiegend höherfunktionelle Starter, wie z.B. Sorbit und Saccharose, zur Anwendung kommen.

Die Polyetherpolyole, vorzugsweise Polyoxypropylen- und Polyoxypropylenpolyoxyethylenpolyole, besitzen eine Funktionalität von vorzugsweise 2 bis 4 und insbesondere 2 bis 3 und Molekulargewichte von 300 bis 8000, vorzugsweise 300 bis 6000 und insbesondere 1000 bis 5000, und geeignete Polyoxytetramethylenglykole ein Molekulargewicht bis ungefähr 3500, während bei Hartschaumpolyetherolen Molekulargewichte von 300 bis 1000 die Regel sind.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyetherpolyolen analog den Angaben der deutschen Patentschriften 1111394, 1222669 (US 3304273, 3383351, 3523093), 1152536 (GB 1040452) und 1152537 (GB 987618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tertiäre Aminogruppen gebunden enthaltende Polyurethane und/oder Melamin und die z.B. beschrieben werden in der EP-B-011752 (US 4304708), US-A-4374209 und DE-A-3231497.

Die Polyetherpolyole können ebenso wie die Polyesterpolyole einzeln oder in Form von Mischungen verwendet werden. Ferner können sie mit den Pfropfpolyetherpolyolen oder Polyesterpolyolen sowie den hydroxylgruppenhaltigen Polyesteramiden, Polyacetalen, Polycarbonaten und/oder Polyetherpolyaminen gemischt werden.

Als hydroxylgruppenhaltige Polyacetale, ebenfalls höhermolekulare Verbindungen mit mindestens zwei reaktiven Wasserstoffatomen, kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.

Zu den Polyesteramiden als höhermolekulare Verbindungen mit mindestens zwei reaktiven Wasserstoffatomen zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen vorwiegend linearen Kondensate.

Geeignete Polyetherpolyamine als höhermolekulare Verbindungen mit mindestens zwei reaktiven Wasserstoffatomen können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US-A-3,267,050) oder die teilweise oder vollständige Aminierung von Polyoxyalkylenpolyolen mit Aminen oder Ammoniak in Gegenwart von Wasserstoff und Katalysatoren (DE 1215373).

Vorzugsweise Anwendung finden Polyesterpolyole und/oder Polyetherpolyole. Die Hydroxylzahl der Polyhydroxylverbindungen beträgt dabei in aller Regel 20 bis 1590 mg KOH/g für den Einsatz in flexiblen Schaumstoffen und vorzugsweise von 20 bis 200 für harte Schaumstoffe. Es ist jedoch möglich, auch Gemische von Polyolen zur Herstellung von flexiblen oder harten Schaumstoffen einzusetzen. In diesem Fall können sowohl für harte als auch flexible Schaumstoffe neben Polyolen im genannten Hydroxylzahlbereich immer auch solche mit abweichender Hydroxylzahl verwendet werden.

Die Polyurethane können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Die Grenze zwischen Kettenverlängerern und polymeren Polyolen ist dabei fließend. Ein Addukt aus Ethandiol und Ethylenoxid ist beispielsweise sowohl ein niederes Polymer, auch als Oligomer bezeichnet, als auch ein Kettenverlängerer.

Sofern zur Herstellung der Polyurethane, insbesondere Schaumstoffe auf Isocyanatbasis, Kettenverlängerungsmittel, Vernetzungsmittel oder Mischungen davon Anwendung finden, kommen diese zweckmäßigerweise in einer Menge von 0 bis 20 Gew.-%, vorzugsweise von 1 bis 8 Gew.-%, bezogen auf das Gewicht der Polyolverbindung, zum Einsatz.

Zur Herstellung von Schaumstoffen auf Isocyanatbasis können als Treibmittel (c) die aus der Polyurethanchemie allgemein bekannten Fluorchlorkohlenwasserstoffe (FCKW), Kohlenwasserstoffe aus Wasserstoff, Kohlenstoff, Chlor und Fluor (HFCKW), Kohlenwasserstoffe aus Wasserstoff, Kohlenstoff und Fluor (HFKW) sowie perfluorierte Kohlenwasserstoffe verwendet werden. Der Einsatz der FCKW und HFCKW sowie der perfluorierten Kohlenwasserstoffe wird jedoch aus ökologischen Gründen stark eingeschränkt bzw. ganz eingestellt. Neben den HFCKW und HFKW bieten sich insbesondere aliphatische und/oder cycloaliphatische Kohlenwasserstoffe, insbesondere Pentan und Cyclopentan oder Acetale, wie z.B. Methylal, sowie auch Tetramethylsilan als Alternativtreibmittel an.

Diese physikalischen Treibmittel werden üblicherweise der Polyolkomponente des Systems zugesetzt. Sie können jedoch auch in der Isocyanatkomponente oder als Kombination sowohl der Polyolkomponente als auch der Isocyanatkomponente zugesetzt werden. Möglich ist auch ihre Verwendung zusammen mit hoch- und/oder perfluorierten Kohlenwasserstoffen in Form einer Emulsion der Polyolkomponente. Als Emulgatoren, sofern sie Anwendung finden, werden üblicherweise oligomere Acrylate eingesetzt, die als Seitengruppen Polyoxyalkylen- und Fluoralkanreste gebunden enthalten und einen Fluorgehalt von ungefähr 5 bis 30 Gew.-% aufweisen. Derartige Produkte sind aus der Kunststoffchemie hinreichend bekannt, z.B. EP-A-351614.

Die eingesetzte Menge des Treibmittels bzw. der Treibmittelmischung liegt dabei bei 1 bis 25 Gew.-%, vorzugsweise 1 bis 15 Gew.-%, jeweils bezogen auf die Polyolkomponente (b).

Weiterhin ist es möglich und üblich, als Treibmittel der Aufbaukomponente (b) Wasser in einer Menge von 0,5 bis 15 Gew.-%, vorzugsweise 1 bis 5 Gew.-%, bezogen auf die Aufbaukomponente (b), zuzusetzen. Der Wasserzusatz kann in Kombination mit dem Einsatz der anderen beschriebenen Treibmittel erfolgen.

Als Katalysatoren (d) zur Herstellung der Polyurethane werden insbesondere Verbindungen verwendet, die die Reaktion der reaktive Wasserstoffatome, insbesondere Hydroxylgruppen, enthaltenden Verbindungen der Komponente (b) mit den erfindungsgemäßen isocyanatgruppenhaltigen Prepolymeren und gegebenenfalls weiteren organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylcyclohexylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, Dimethylpiperazin, 1,2-Dimethylimidazol, 1-Azabicyclo-(3,3,0)-octan und vorzugsweise 1,4-Diazabicyclo-(2,2,2)-octan, und Alkanolaminverbindungen, wie Triethanolamin, Triisopropanolamin, N-Methyl- und N-Ethyldiethanolamin und Dimethylethanolamin. Als Katalysatoren kommen ferner in Betracht:
Tris-(dialkylaminoalkyl)-s-hexahydrotriazine, insbesondere
Tris-(N,N-dimethylaminopropyl)-s-hexahydrotriazin, Tetraalkylammoniumhydroxide, wie Tetramethylammoniumhydroxid, Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Aufbaukomponente (b).

Die Reaktion der Isocyanatgruppen untereinander, z.B. zu Isocyanuratgruppen, wird bei Bedarf in bekannter Weise zusätzlich katalysiert, z.B. mit Kaliumacetat, Kaliumoctoat, quarternären Ammoniumsalzen sowie z.B. Triazinen und Pentamethyldiethylentriamin.

Der Reaktionsmischung zur Herstellung der Polyurethanschaumstoffe können gegebenenfalls noch weitere Hilfsmittel und/oder Zusatzstoffe (e) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze der Ricinusölsulfate, oder Fettsäuren sowie Salzen von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure, Schaumstabilisatoren, wie Siloxanoxalkylenmischpolymerisate und andere Organopolysiloxane, oxethylierte Alkylphenole, oxethylierte Fettalkohole, Paraffinöle, Ricinusöl-, bzw. Ricinolsäureester, Türkischrotöl und Erdnußöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Sub-stanzen werden üblicherweise in Mengen von 0,01 bis 5 Gew.-Teilen, bezogen auf 100 Gew.-Teile der Aufbaukomponente (b), angewandt.

Als Füllstoffe, insbesondere verstärkend wirkende Füllstoffe, sind die an sich bekannten, üblichen organischen und anorganischen Füllstoff, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe, wie silikatische Mineralien, beispielsweise Schichtsilikate, wie Antigorit, Serpentin, Hornblenden, Ampibole, Chrisotil und Talkum, Metalloxide, wie Kaolin, Aluminiumoxide, Titanoxide und Eisenoxide, Metallsalze, wie Kreide und Schwerspat, und anorganische Pigmente, wie Cadmiumsulfid, Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cycalopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) und (b), einverleibt, wobei jedoch der Gehalt an Matten, Vliesen und Geweben aus natürlichen und synthetischen Fasern Werte bis 80 Gew.-% erreichen kann.

Geeignete Flammschutzmittel sind beispielsweise Trikresylphosphat, Tris-(2-chlorethyl)phosphat, Tris-(2-chlorpropyl)-phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Im allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Aufbaukomponente (b) zu verwenden.

Nähere Angaben über die oben genannten anderen üblichen Hilfs- und Zusatzstoffe sind der Fachliteratur, beispielsweise der Monographie von J. H. Saunders und K. C. Frisch "High Polymers" Band XVI, Polyurethanes, Teil 1 und 2, Verlag Interscience Publishers 1962 bzw. 1964, oder dem Kunststoffhandbuch, Polyurethane, Band VII, Hanser-Verlag München, Wien, 1., 2. und 3. Auflage, 1966, 1983 und 1993, zu entnehmen.

Zur Herstellung der Polyurethane, insbesondere der Schaumstoffe auf Isocyanatbasis, werden die erfindungsgemäßen NCO-Prepolymeren oder deren Gemische mit anderen Isocyanaten (a), Verbindungen mit mindestens zwei reaktiven Wasserstoffatomen (b) in solchen Mengen zur Umsetzung gebracht, daß das Äquivalenzverhältnis von NCO-Gruppen der Prepolymeren und Polyisocyanate (a) zur Summe der reaktiven Wasserstoffatome der Komponenten (b) 0,80 bis 5 : 1, vorzugsweise 0,90 bis 1,5 :1 für Polyurethane und 1,5 :1 bis 5:1 für Polyurethan/Polyisocyanurate, beträgt.

Die Polyurethane, insbesondere Schaumstoffe auf Isocyanatbasis, werden vorteilhafterweise nach dem one-shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Üblich ist auch die kontinuierliche Auftragung des Reaktionsgemisches auf geeigneten Bandstraßen zur Erzeugung von Schaumblöcken, -platten oder Sandwichelementen.

Als besonders vorteilhaft hat es sich erwiesen, nach dem Zweikomponentenverfahren zu arbeiten und die Aufbaukomponenten (b), (d) und gegebenenfalls (c) und (e) in der Komponente (A) zu vereinigen und als Komponente (B) die NCO-Prepolymeren oder Mischungen aus den genannten Prepolymeren und weiteren Polyisocyanaten (a) und gegebenenfalls Treibmittel (c) zu verwenden.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann mechanisch mittels eines Rührers, mittels einer Rührschnecke oder durch eine Hochdruckvermischung in einer Düse durchgeführt werden. Die Formwerkzeugtemperatur beträgt zweckmäßigerweise 20 bis 110°C, vorzugsweise 30 bis 60°C und insbesondere 35 bis 55°C.

Die nach dem erfindungsgemäßen Verfahren hergestellten Schaumstoffe auf Isocyanatbasis weisen eine Dichte von 10 bis 800 kg/m³, vorzugsweise von 30 bis 500 kg/m³ und insbesondere von 30 bis 70 kg/m³, auf. Sie können zusätzlich zu den Urethangruppen gegebenenfalls Isocyanurat-, Harnstoff-, Biuret-, Allophanat-, Oxazolidon-, Polyimid-, Polyamid- und Carbodiimidgruppen und Addukte der Carbodiimidgruppen mit NCO-Gruppen enthalten.

Die so insbesondere hergestellten Schaumstoffe eignen sich beispielsweise als Hartschaum für die Wärmedämmung für z.B. Kühlschrank, Fernwärme, Wärmespeicher, Sandwichelemente, Isolierplatten etc. sowie als Weichschaum für Polsterzwecke im Möbel- und Autobereich und als Bestandteil von Integralschaumstoffsystemen.

Die erfindungsgemäßen Prepolymeren können aber auch zur Herstellung von nichtzelligen Polyurethanen, wie z.B. Gießharzen, Klebern oder Dichtungsmassen, verwendet werden.

Die vorliegende Erfindung soll anhand der angeführten Beispiele erläutert werden, ohne jedoch hierdurch eine entsprechende Eingrenzung vorzunehmen.

### Beispiel 1 (Vergleich)

Die A - Komponente, eine Mischung aus (Teile = Masse-Teile):

| | |
|---|---|
| 41,5 | Teilen eines Polyetherols auf Basis Saccharose, Glycerin, Wasser und Propylenoxid, OH-Zahl 400 mg KOH/g (Lupranol® 3321, BASF), |
| 15 | Teilen eines Polyetherols auf Basis Saccharose, Glycerin, Wasser und Propylenoxid, OH-Zahl 490 mg KOH/g (Lupranol® 3423, BASF), |
| 22 | Teilen Trichlorpropylphosphat, |
| 10 | Teilen Flammschutzmittels auf Basis von Halogen- und Phosphorverbindungen, OH-Zahl 86 mg KOH/g (Lupragen® VP 9270, BASF), |
| 10 | Teilen Flammschutzmittel auf Basis eines Chlor und Brom enthaltenden Polyetherols, OH-Zahl 330 mg KOH/g (IXOL B 251, Fa. Solvay), |
| 0,5 | Teilen Silikonstabilisator Tegostab B 8466, Fa. Goldschmidt, |
| 0,5 | Teilen Stabilisator OS 340, Fa. Bayer AG, |
| 2,3 | Teilen Katalysator KX 315, Fa. Elastogran GmbH, |
| 2,36 | Teilen Wasser und |
| 1,24 | Teilen Dipropylenglykol |

wurde mit 140,2 Teilen Lupranat® M 50 (BASF), einem Gemisch aus Diphenylmethandiisocyanaten und Polyphenylpolymethylenpolyisocyanaten mit einer Viskosität von 520 mPas bei 25°C, einem NCO-Gehalt von 30,5 Gew.-% und einem Zweikernanteil von 32 Gew.-%, umgesetzt.

Es ergaben sich folgende Meßwerte bei der Freiverschäumung:

| | |
|---|---|
| Topfzeit in s | 18 |
| Abbindezeit in s | 58 |
| Rohdichte, frei, in kg/m³ Bolzentest, Werte in N | 49 |
| 3 min | 37,5 |
| 5 min | 86,9 |

Der Bolzentest ist ein Maß für die Aushärtung im bekannten Becherversuch. Nach der angegebenen Zeit nach der Vermischung wird eine Halbkugelkalotte mit einem Radius von 10 mm in die Oberfläche des frisch entstandenen Schaumpilzes gedrückt und die dabei auftretende Maximalkraft gemessen.

Herstellung von Hartschaumstoff-Formkörpern, Charakterisierung der Rißbildung 100 Masse-Teile des A-Komponenten-Gemisches wurden mit dem in den Rezepturen angegebenen Mischungsverhältnis mit dem Polyisocyanat vermischt. Die Vermischung erfolgte mit einem Laborrührwerk. 576 g dieses Gemisches aus A-Komponente und Isocyanat wurden unmittelbar nach dem Vermischen in ein auf 45°C temperiertes Formwerkzeug der Abmessungen 300 mm x 400 mm x 80 mm gegossen, das anschließend fest verschlossen wurde. Die Gesamtdichte des Formkörpers betrug dann 60 +/-1 kg/m³. Nach einer Entformzeit von 2,5 Minuten wurde der Formkörper 24 Stunden bei Raumtemperatur gelagert, anschließend mittig über die 400 mm Länge zersägt und auf Rißbildung untersucht. Die Beurteilung erfolgte visuell und wurde mit einem Kopiergerät im Maßstab 1:1 dokumentiert. Mit einem Lineal wurde die mittlere Rißdicke an den Kopien als Mittelwert an 5 festgelegten Stellen (bei 100, 150, 200, 250 und 300 mm) über der 400 mm - Länge vermessen.

Ergebnis: Es wurde eine Rißbreite von 2,4 mm festgestellt.

Härtung im Inneren des Schaumstoffes:
Zur Bestimmung der Kernhärtung wird die Druckfestigkeit 6 min nach dem Vermischen gemessen. Aus einem in einer oben offenen Holzform 150 mm x 150 mm x 150 mm mit senkrechten Führungsschlitzen hergestellten Schaumstoff werden 3 min nach dem Beginn des Mischens Probekörper 100 mm x 100 mm x 150 mm geschnitten und in der Form belassen. 6 Minuten nach dem Beginn des Vermischens werden diese Körper im Druckversuch bei 80 mm/min geprüft. Die Druckkraft beim ersten Maximum ist ein Maß für die Nachhärtung im Kern.

Ergebnis: Druckfestigkeit nach 6 Minuten in N/dm² 1015

### Beispiel 2 (erfindungsgemäß)

### Herstellung des Prepolymeren:

97,9 Masse-Teile Lupranat® M 20 (BASF) mit einem höheren Anteil an Diphenylmethandiisocyanaten (42 Gew.-%) und einem entsprechend niedrigeren Anteil an Polyphenylpolymethylenpolyisocyanaten, charakterisiert durch eine Viskosität von 190 mPas bei 25°C, wurden bei 80°C über 1 Stunde mit 2,1 Masse-Teilen eines Polyetherols aus Sorbit, Propylenoxid und Wasser, OH-Zahl 489 mg KOH/g (Lupranol® 3422, BASF) umgesetzt. Das entstandene Prepolymere hatte eine Viskosität von 537 mPas bei 25°C, der NCO-Gehalt betrug 30,7 Gew.-%.

Die A-Komponente nach Beispiel 1 wurde anstelle mit Lupranat® M 50 mit diesem erfindungsgemäßen Prepolymeren in völlig gleichen Mengenverhältnissen umgesetzt. Die Meßmethoden entsprachen denen in Beispiel 1.

### Ergebnisse:

| | |
|---|---|
| Topfzeit in s | 18 |
| Abbindezeit in s | 59 |
| Rohdichte, frei, in kg/m³ | 49,9 |
| Bolzentest, Werte in N | |
| 3 min | 39,4 |
| 5 min | 94,3 |
| | |
| Rißbreite in mm | 1,9 |
| Druckfestigkeit nach 6 Minuten in N/dm² | 1189 |

### Beispiel 3 (Vergleich)

Die A-Komponente nach Beispiel 1 wurde mit 125,1 Masse-Teilen Lupranat® M 50, einem Gemisch aus Diphenylmethandiisocyanaten und Polyphenylpolymethylenpolyisocyanaten mit einer verringerten Viskosität von 391 mPas bei 25°C, einem NCO-Gehalt von 31,8 Gew.-% und einem Zweikernanteil von 42 Gew.-%, umgesetzt.

### Ergebnisse:

| | |
|---|---|
| Topfzeit in s | 18 |
| Abbindezeit in s | 58 |
| Rohdichte, frei, in kg/m³ | 48,5 |
| | |
| Rißbreite in mm | 5,1 |
| Druckfestigkeit nach 6 Minuten in N/dm² | 1081 |

### Beispiel 4 (erfindungsgemäß)

### Herstellung des Prepolymeren:

99,6 Masse-Teile Lupranat® M 50 nach Beispiel 3 wurden bei 80°C über 1 Stunde mit 0,4 Masse-Teilen eines Polyetherols aus Sorbit, Propylenoxid und Wasser (Lupranol® 3422) umgesetzt. Das entstandene Prepolymere hatte eine Viskosität von 537 mPas bei 25°C, der NCO - Gehalt betrug 31,5 Gew.-%.

Die A-Komponente nach Beispiel 1 wurde anstelle mit Lupranat® M 50 nach Beispiel 3 mit diesem erfindungsgemäßen Prepolymeren in völlig gleichen Mengenverhältnissen umgesetzt. Die Meßmethoden entsprachen denen in Beispiel 1.

### Ergebnisse:

| | |
|---|---|
| Topfzeit in s | 17 |
| Abbindezeit in s | 57 |
| Rohdichte, frei, in kg/m³ | 49,5 |
| Rißbreite in mm | 2,1 |
| Druckfestigkeit nach 6 Minuten in N/dm² | 1220 |

### Beispiel 5

In einen mit einer Geschwindigkeit von 97,5 kg/min fließenden Lupranat® M10-Prozeßstrom, der eine Temperatur von 80°C hatte, wurde kontinuierlich über einen Statikmischer ein Polyol auf der Grundlage von Sorbit und Propylenoxid mit einer OH-Zahl von 490 mg KOH/g (Lupranol® 3422, BASF) mit einer Geschwindigkeit von 2,5 kg/min zudosiert. Zum Ausreagieren gelangte das Gemisch in einen Lagerbehälter, in dem dieses mit einer Kreislaufpumpe umgewälzt wurde.

Das entstandene Prepolymere hatte einen NCO-Gehalt von 30,2 Gew.-% bei einer Viskosität von 390 mPas bei 25°C.

Das Lupranat® M 10 (BASF) ist ein Gemisch aus Diphenylmethandiisocyanaten und Polyphenylpolymethylenpolyisocyanaten mit einer Viskosität von 115 mPas und einem Zweikerngehalt von 48 Gew.-%.

Das Prepolymere ergab in einer üblichen Formulierung mit (Teile = Masse-Teile):

| | |
|---|---|
| 90,85 | Teilen eines Polyetherols auf Basis Propylenglykol, Propylenoxid und Ethylenoxid, OH-Zahl 29 mg KOH/g (Lupranol® 2043, BASF), |
| 3 | Teilen eines Polyetherols auf Basis Glycerin, Propylen oxid und Ethylenoxid, OH-Zahl 42 mg KOH/g (Lupranol® 2047, BASF), |
| 1 | Teil Glycerin, |
| 0,9 | Teilen Diethanolamin, |
| 0,3 | Teilen Stabilisator Tegostab B 4113 (Fa. Goldschmidt), |
| 0,45 | Teilen Aminkatalysatorgemisch und |
| 3,5 | Teilen Wasser, |

gemischt mit

| | |
|---|---|
| 26,5 | Teilen Tolyulendiisocyanat (Lupranat® T 80, BASF) und |
| 26,5 | Teilen des beschriebenen Prepolymeren |

einen Weichschaumstoff mit einer feinzelligen Struktur.

### Beispiel 6 (Vergleich)

Mit einem üblichen Doppeltransportband wird folgendes Polyurethan-Hartschaumsystem unter alleiniger Benutzung von Wasser als Treibmittel zu Sandwichelementen mit Stahldeckschichten verarbeitet:

### A-Komponente

| | |
|---|---|
| 52,5 | Teile Lupranol® 3321, |
| 7 | Teile Lupranol® 3423, |
| 13 | Teile Trichlorpropylphosphat |
| 14 | Teile Lupragen® VP 9270, |
| 3,5 | Teile Diethylethylphosphonat, |
| 8,5. | Teile Flammschutzmittel IXOL B 251, |
| 2,06 | Teile Wasser, |
| 1,0 | Teil Stabilisator Tegostab B 8466, |
| 2,3 | Teile Katalysator KX 315 und |
| 1,04 | Teile Dipropylenglykol |

### B-Komponente

123 Teile Lupranat® M50 gemäß Beispiel 1

A- und B-Komponente wurden maschinell umgesetzt. Die Mengenströme betrugen 7768 g/min A- und 9108 g/min B-Komponente.
Die Härtung des Schaumes war nicht zufriedenstellend. Am Querschneider zum Ablängen der Elemente entstanden beim Sägen Risse.

### Beispiel 7 (erfindungsgemäß)

Es wurde wie bei Beispiel 6 verfahren. Als B-Komponente wurden aber 123 Masse-Teile Prepolymer gemäß Beispiel 4 im Austausch zu 123 Masse-Teilen Lupranat® M50 eingesetzt.

Die Härtung des Schaumes war gut. Am Querschneider zum Ablängen der Elemente entstanden beim Sägen keine Risse.

## Patentansprüche

1. Isocyanatgruppenhaltige Prepolymere, herstellbar durch Umsetzung eines Isocyanatgemisches, bestehend vorwiegend aus Diphenylmethandiisocyanaten und Polyphenylpolymethylenpolyisocyanaten, mit einem Anteil an Zweikernisomeren von höchstens 74 Gew.-% mit mindestens 4-funktionellen Polyolen oder einem Gemisch von Polyolen mit einer mittleren Funktionalität von mindestens 4, wobei die Polyole beziehungsweise Polyolgemische eine Hydroxylzahl von 200 bis 1650 mg KOH/g und eine zahlenmittlere Molmasse von weniger als 1100 g/mol aufweisen, mit einem NCO - Gehalt von mindestens 30,0 Gew.-%.

2. Isocyanatgruppenhaltige Prepolymere nach Anspruch 1, **dadurch gekennzeichnet, daß** die eingesetzten Polyole beziehungsweise Polyolgemische eine Hydroxylzahl von 300 bis 1000 mg KOH/g aufweisen.

3. Isocyanatgruppenhaltige Prepolymere nach Anspruch 1 oder 2, **dadurch gekennzeichnet, daß** die eingesetzten Polyole beziehungsweise Polyolgemische eine zahlenmittlere Molmasse von 280 bis 1000 g/mol aufweisen.

4. Isocyanatgruppenhaltige Prepolymere nach einem der Ansprüche 1 bis 3, **dadurch gekennzeichnet, daß** das eingesetzte Polyol ein Polyetherol ist.

5. Isocyanatgruppenhaltige Prepolymere nach einem der Ansprüche 1 bis 4, **dadurch gekennzeichnet, daß** das eingesetzte Polyol ein Umsetzungsprodukt von Sorbit, Wasserspuren und Propylenoxid mit einer Hydroxylzahl von 200 bis 800 mg KOH/g ist.

6. Isocyanatgruppenhaltige Prepolymere nach einem der Ansprüche 1 bis 5, **dadurch gekennzeichnet, daß** das eingesetzte Isocyanatgemisch einen Anteil an Zweikernisomeren zwischen 25 und 70 Gew.-% aufweist.

7. Isocyanatgruppenhaltige Prepolymere nach einem der Ansprüche 1 bis 6, **dadurch gekennzeichnet, daß** die Umsetzung des Isocyanatgemisches mit den Polyolen oder dem Polyolgemisch durch Dosierung der Polyole oder des Polyolgemisches unmittelbar in den Prozeßstrom und/oder den Isocyanatbehälter der isocyanaterzeugenden Anlage erfolgt.

8. Isocyanatgruppenhaltige Prepolymere nach einem der Ansprüche 1 bis 7, **dadurch gekennzeichnet, daß** neben den Polyolen oder Polyolgemischen weitere organische Isocyanate in den Prozeßstrom und/oder den Isocyanatbehälter der isocyanaterzeugenden Anlage dosiert werden.

9. Verfahren zur Herstellung von isocyanatgruppenhaltigen Prepolymeren durch Umsetzung eines Isocyanatgemisches, bestehend vorwiegend aus Diphenylmethandiisocyanaten und Polyphenylpolymethylenpolyisocyanaten, mit einem Anteil an Zweikernisomeren von höchstens 74 Gew.-% mit mindestens 4-funktionellen Polyolen oder einem Gemisch von Polyolen mit einer mittleren Funktionalität von mindestens 4, wobei die Polyole beziehungsweise Polyolgemische eine Hydroxylzahl von 200 bis 1650 mg KOH/g und eine zahlenmittlere Molmasse von 136 bis 1090 g/mol aufweisen.

10. Verfahren nach Anspruch 9, **dadurch gekennzeichnet, daß** die Umsetzung zum Prepolymeren durch Dosierung der Polyole oder des Polyolgemisches unmittelbar in den Prozeßstrom und/oder den Isocyanatbehälter der isocyanaterzeugenden Anlage erfolgt.

11. Verfahren nach Anspruch 9 oder 10, **dadurch gekennzeichnet, daß** die Dosierung der Polyole oder Polyolgemische kontinuierlich und/oder diskontinuierlich erfolgt.

12. Verfahren nach einem der Ansprüche 9 bis 11, **dadurch gekennzeichnet, daß** eine Reaktionstemperatur von 20 bis 100°C, vorzugsweise von 70 bis 90°C, eingehalten wird.

13. Verfahren nach einem der Ansprüche 9 bis 12, **dadurch gekennzeichnet daß** die Polyole oder Polyolgemische in einer Menge von 0,1 bis 5 Gew.-%, bezogen auf das Gesamtgewicht des Prepolymeren, eingesetzt werden.

14. Verfahren nach einem der Ansprüche 9 bis 13, **dadurch gekennzeichnet daß** neben den Polyolen oder Polyolgemischen weitere organische Isocyanate in den Prozeßstrom und/oder den Isocyanatbehälter der isocyanaterzeugenden Anlage dosiert werden.

15. Verwendung der isocyanatgruppenhaltigen Prepolymere gemäß einem der Ansprüche 1 bis 8 zur Herstellung von Polyurethanen.

16. Verfahren zur Herstellung von Polyurethanen durch Umsetzung von mindestens einem isocyanatgruppenhaltigen Prepolymeren, gegebenenfalls im Gemisch mit weiteren organischen und/oder modifizierten organischen Isocyanaten (a) mit Verbindungen mit mindestens zwei reaktiven Wasserstoffatomen (b) in Gegenwart von gegebenenfalls Treibmitteln (c), Katalysatoren (d) sowie gegebenenfalls weiteren Hilfsmitteln und/oder Zusatzstoffen (e), **dadurch gekennzeichnet, daß** als isocyanatgruppenhaltige Prepolymere solche gemäß einem der Ansprüche 1 bis 8 eingesetzt werden.

## Claims

1. A prepolymer which contains isocyanate groups, has an NCO content of at least 30.0% by weight and can be prepared by reacting an isocyanate mixture consisting predominantly of diphenylmethane diisocyanates and polyphenylpolymethylene polyisocyanates and having a proportion of two-ring isomers of not more than 74% by weight with at least 4-functional polyols or a mixture of polyols having a mean functionality of at least 4, where the polyols or polyol mixtures have a hydroxyl number of from 200 to 1650 mg KOH/g and a number average molecular weight of less than 1100 g/mol.

2. A prepolymer containing isocyanate groups as claimed in claim 1, wherein the polyols or polyol mixtures used have a hydroxyl number of from 300 to 1000 mg KOH/g.

3. A prepolymer containing isocyanate groups as claimed in claim 1 or 2, wherein the polyols or polyol mixtures used have a number average molecular weight of from 280 to 1000 g/mol.

4. A prepolymer containing isocyanate groups as claimed in any of claims 1 to 3, wherein the polyol used is a polyetherol.

5. A prepolymer containing isocyanate groups as claimed in any of claims 1 to 4, wherein the polyol used is a reaction product of sorbitol, propylene oxide and traces of water having a hydroxyl number of from 200 to 800 mg KOH/g.

6. A prepolymer containing isocyanate groups as claimed in any of claims 1 to 5, wherein the isocyanate mixture used has a proportion of two-ring isomers of from 25 to 70% by weight.

7. A prepolymer containing isocyanate groups as claimed in any of claims 1 to 6, wherein the reaction of the isocyanate mixture with the polyols or the polyol mixture is carried out by metering the polyols or the polyol mixture directly into the process stream and/or the isocyanate container of the isocyanate-producing plant.

8. A prepolymer containing isocyanate groups as claimed in any of claims 1 to 7, wherein, in addition to the polyols or polyol mixtures, further organic isocyanates are metered into the process stream and/or the isocyanate container of the isocyanate-producing plant.

9. A process for preparing prepolymers containing isocyanate groups by reacting an isocyanate mixture consisting predominantly of diphenylmethane diisocyanates and polyphenylpolymethylene polyisocyanates and having a proportion of two-ring isomers of not more than 74% by weight with at least 4-functional polyols or a mixture of.polyols having a mean functionality of at least 4, where the polyols or polyol mixtures have a hydroxyl mixture of from 200 to 1650 mg KOH/g and a number average molecular weight of from 136 to 1090 g/mol.

10. A process as claimed in claim 9, wherein the reaction to form the prepolymer is carried out by metering the polyols or the polyol mixture directly into the process stream and/or the isocyanate container of the isocyanate-producing plant.

11. A process as claimed in claim 9 or 10, wherein the polyols or polyol mixtures are metered in continuously and/or discontinuously.

12. A process as claimed in any of claims 9 to 11, wherein a reaction temperature of from 20 to 100°C, preferably from 70 to 90°C, is maintained.

13. A process as claimed in any of claims 9 to 12, wherein the polyols or polyol mixtures are used in an amount of from 0.1 to 5% by weight, based on the total weight of the prepolymer.

14. A process as claimed in any of claims 9 to 13, wherein, in addition to the polyols or polyol mixtures, further organic isocyanates are metered into the process stream and/or the isocyanate container of the isocyanate-producing plant.

15. The use of a prepolymer containing isocyanate groups as claimed in any of claims 1 to 8 for producing polyurethanes.

16. A process for producing polyurethanes by reacting at least one prepolymer containing isocyanate groups, if desired in admixture with further organic and/or modified organic isocyanates (a), with compounds containing at least two reactive hydrogen atoms (b) in the presence of, if desired, blowing agents (c), catalysts (d) and, if desired, further auxiliaries and/or additives (e), wherein the prepolymers containing isocyanate groups which are used are ones as claimed in any of claims 1 to 8.

## Revendications

1. Prépolymères contenant des groupes isocyanates, que l'on peut préparer par réaction d'un mélange d'isocyanates se composant pour l'essentiel de diisocyanates de diphénylméthane et de polyisocyanates de polyphénylpolyméthylène, avec une teneur en isomères à deux noyaux de 74% en poids au plus, avec au moins des polyols tétrafonctionnels ou un mélange de polyols ayant une fonctionnalité moyenne d'au moins 4, les polyols ou les mélanges de polyols présentant un indice hydroxyle de 200 à 1 650 mg de KOH/g et une masse molaire moyenne en nombre de moins de 1 100 g/mole, avec une teneur en groupe NCO d'au moins 30,0% en poids.

2. Prépolymères contenant des groupes isocyanates selon la revendication 1, **caractérisés en ce que** les polyols ou les mélanges de polyols mis en oeuvre présentent un indice hydroxyle de 300 à 1 000 mg de KOH/g.

3. Prépolymères contenant des groupes isocyanates selon la revendication 1 ou 2, **caractérisés en ce que** les polyols ou les mélanges de polyols mis en oeuvre présentent une masse moléculaire moyenne en nombre de 280 à 1 000 g/mole.

4. Prépolymères contenant des groupes isocyanates selon l'une quelconque des revendications 1 à 3, **caractérisés en ce que** le polyol mis en oeuvre est un polyéthérol.

5. Prépolymères contenant des groupes isocyanates selon l'une quelconque des revendications 1 à 4, **caractérisés en ce que** le polyol mis en oeuvre est un produit de réaction du sorbitol, de traces d'eau et d'oxyde de propylène avec un indice hydroxyle de 200 à 800 mg de KOH/g.

6. Prépolymères contenant des groupes isocyanates selon l'une quelconque des revendications 1 à 5, **caractérisés en ce que** le mélange d'isocyanates mis en oeuvre présente une teneur en isomères à deux noyaux comprise entre 25 et 70% en poids.

7. Prépolymères contenant des groupes isocyanates selon l'une quelconque des revendications 1 à 6, **caractérisés en ce que** la réaction du mélange d'isocyanates avec les polyols ou le mélange de polyols a lieu par dosage des polyols ou du mélange de polyols directement dans le courant de procédé et/ou les récipients pour isocyanates de l'installation produisant des isocyanates.

8. Prépolymères contenant des groupes isocyanates selon l'une quelconque des revendications 1 à 7, **caractérisés en ce que**, mis à part les polyols ou les mélanges de polyols, d'autres isocyanates organiques sont dosés dans le courant de procédé et/ou les récipients pour isocyanates de l'installation produisant des isocyanates.

9. Procédé de préparation de prépolymères contenant des groupes isocyanates par réaction d'un mélange d'isocyanates constitué pour l'essentiel di-isocyanates de diphénylméthane, et de polyisocyanates de polyphénylpolyméthylène, avec une teneur en isomères à deux noyaux de 74% en poids au plus avec au moins des polyols tétrafonctionnels ou un mélange de polyols avec une fonctionnalité moyenne d'au moins 4, les polyols ou les mélanges de polyols présentant un indice hydroxyle de 200 à 1 650 mg de KOH/g et une masse moléculaire moyenne en nombre de 136 à 1 090 g/mole.

10. Procédé selon la revendication 9, **caractérisé en ce que** la réaction menant au prépolymère a lieu par dosage des polyols ou du mélange de polyols directement dans le courant de procédé et/ou les récipients pour isocyanates de l'installation produisant les isocyanates.

11. Procédé selon la revendication 9 ou 10, **caractérisé en ce que** le dosage des polyols ou de mélanges de polyols a lieu en continu et/ou en discontinu.

12. Procédé selon l'une quelconque des revendications 9 à 11, **caractérisé en ce qu'**une température de réaction est maintenue, de 20 à 100°C, de préférence de 70 à 90°C.

13. Procédé selon l'une quelconque des revendications 9 à 12, **caractérisé en ce que** les polyols ou les mélanges de polyols sont mis en oeuvre en une quantité de 0,1 à 5% en poids, par rapport au poids total du prépolymère.

14. Procédé selon l'une quelconque des revendications 9 à 13, **caractérisé en ce que**, mis à part les polyols ou les mélanges de polyols, d'autres isocyanates organiques sont dosés dans le courant de procédé et/ou les récipients pour isocyanates de l'installation produisant des isocyanates.

15. Utilisation des prépolymères contenant des groupes isocyanates selon l'une quelconque des revendications 1 à 8, pour la préparation de polyuréthanes.

16. Procédé de préparation de polyuréthanes par réaction d'au moins un prépolymère contenant des groupes isocyanates, éventuellement en mélange avec d'autres isocyanates organiques et/ou organiques modifiés, (a) avec des composés ayant au moins deux atomes d'hydrogène réactifs (b) en présence éventuellement d'agents moussants (c), de catalyseurs (d), ainsi qu'éventuellement d'autres adjuvants et/ou additifs (e), **caractérisé en ce que** l'on met en oeuvre comme prépolymères contenant des groupes isocyanates ceux selon l'une quelconque des revendications 1 à 8.
